Europäisches Patentamt

European Patent Office

Office européen des brevets

(19)

(11) Veröffentlichungsnummer: **0 508 338 A1**

(12) **EUROPÄISCHE PATENTANMELDUNG**

(21) Anmeldenummer: **92105864.0**

(22) Anmeldetag: **04.04.92**

(51) Int. Cl.5: **C02F 1/32**

(30) Priorität: **10.04.91 DE 4111663**

(43) Veröffentlichungstag der Anmeldung:
**14.10.92 Patentblatt 92/42**

(84) Benannte Vertragsstaaten:
**AT CH DE LI NL**

(71) Anmelder: **DIEHL UMWELTTECHNIK GmbH**
**Vieringhausen 118**
**W-5630 Remscheid(DE)**

(72) Erfinder: **Schwanke, Ulrich, Dr.**
**Alleestrasse 90**
**W-5630 Remscheid(DE)**

(74) Vertreter: **Hofmann, Gerhard, Dipl.-Ing.**
**Patentassessor et al**
**Stephanstrasse 49**
**W-8500 Nürnberg 30(DE)**

(54) **Verfahren und Vorrichtung zur Photolyse von organischen Schadstoffen in Wasser.**

(57) Die Zerstörung von organischen Schadstoffen in Wasser wird durch einen Hochdruckstrahler (30) erreicht, indem das Wasser in einem Behälter (2) zunächst verwirbelt wird und dann erst in den Bereich des UV-Lichtes gelangt, wobei das Wasser etwa wendelförmig um den Hochdruckstrahler (30) umläuft.

Die Erfindung bezieht sich auf ein Verfahren und eine Vorrichtung zur Photolyse von organischen Schadstoffen in Wasser nach dem Oberbegriff des Anspruches 1.

Ein Verfahren und eine Vorrichtung zur Photolyse von organischen Schadstoffen in Wasser ist aus der DE 38 37 905 A1 bekannt. Innerhalb einer einzigen Vorrichtung sind mehrere voneinander verschiedene UV-Lichtquellen mit jeweils unterschiedlichen Spektrallinien vorgesehen. Durch gleichzeitiges Einschalten, durch kombiniertes Einschalten oder durch jeweils getrenntes Einschalten der unterschiedlichen UV-Lichtquellen ist es möglich, das zu behandelnde Medium in entsprechenden Kombinationen mit unterschiedlichen Spektrallinien zu behandeln.

Die relevanten Schadstoffe können nur indirekt abgebaut werden, durch Beimischung zusätzlicher Oxidationsmittel, wie Wasserstoffperoxid oder Ozon.

Aufgabe der Erfindung ist es, ein Verfahren und eine Vorrichtung zur direkten Photolyse von organischen Schadstoffen in Wasser vorzuschlagen, das bzw. die einen hohen Wirkungsgrad und einen geringen apparativen Aufwand aufweist.

Dabei sollen auf kostengünstige Weise möglichst alle relevanten Schadstoffe im Medium beseitigt werden. Die Lösung dieser Aufgabe ist den Ansprüchen 1 und 2 zu entnehmen.

Vorteilhafte Weiterbildungen der Erfindung sind in den Unteransprüchen angegeben.

Erfindungsgemäß werden die organischen Schadstoffe durch UV-Strahlung hoher Intensität direkt photolytisch gespalten. Die dabei entstehenden Radikale reagieren mit dem umgebenden Wasser bzw. mit dem im Wasser gelösten Sauerstoff. Die Schadstoffe werden vollständig oxidiert, als Endprodukt entsteht lediglich $CO_2$, wobei bei der Photooxidation von LCKW's auch HCl entsteht.

Bisher kamen praktisch ausschließlich Quecksilber-Niederdruckstrahler zum Einsatz. Diese ergeben eine Emission mit dem Maximum bei 254 nm. Diese Linie ist zum direkten photolytischen Abbau von vielen organischen Verbindungen ungeeignet, da das Maximum von Emission der Lampe und Absorption des Schadstoffmoleküls nicht übereinstimmen und ein Großteil der Energie wirkungslos verpufft.

Man umging diese Schwierigkeit beim Einsatz von Hg-Niederdruckstrahlern, indem man zusätzlich Ozon erzeugt und das Ozon dem zu behandelnden Wasser zusetzt. Ozon besitzt sehr gute Absorptionseigenschaften mit einem Maximum gerade bei 253 nm. Die Ozonerzeugung ist relativ aufwendig und die Löslichkeit des Ozons im Wasser ist begrenzt. Ozon ist außerdem explosiv und giftig, so daß zusätzliche Schutzmaßnahmen getroffen werden müssen.

Die Energiedichte von Hg-Niederdruckstrahlern ist technisch bedingt sehr niedrig, so daß bisherige Wasserbehandlungsanlagen sehr groß sind und im allgemeinen eine Vielzahl von Lampen eingesetzt werden muß, mit der entsprechenden Störanfälligkeit.

Die Erfindung unterscheidet sich grundsätzlich von bisher praktischen Methoden. Anstelle von Ng-Niederdruckstrahlern kommen hier Hochdruckstrahler zum Einsatz. Die Energiedichte ist ca. 100 mal höher als bei den Niederdruckstrahlern. Das Emissionsspektrum des Hochdruckstrahlers ist breitbandig. Neben dem Hauptmaximum bei 254 nm besitzt dieser Strahler noch eine starke Emission im Bereich 200 bis 240 nm und im Bereich > 260 nm. Diese Lampe deckt dabei praktisch den ganzen Bereich ab, der für die photolytische Spaltung von organischen Bindungen von Bedeutung ist.

Die Bindungsenergie organischer Moleküle liegt fast immer bei E > 4,13 eV, dies entspricht Wellenlängen, die unterhalb von 300 nm liegen.

Gerade für häufig anzutreffende Schadstoffe wie z. B. Tri- und Tetrachlorethen oder Benzol, Toluol und Xylol, deren Absorptionsmaxima bei 200 bis 250 nm liegen, ist das erfindungsgemäße Verfahren eine sehr gute Methode.

Beim erfindungsgemäßen Verfahren werden im Primärschritt durch photolytische Bindungsspaltung zwei Radikale erzeugt. Diese beiden Radikale induzieren eine Reaktionskette, an deren Ende $CO_2$ und Wasser übrigbleiben. Die im Primärschritt erzeugten Radikale reagieren mit dem im Wasser gelösten Sauerstoff oder dem umgebenden Wasser selbst. Dabei entstehen wiederum Hydroxyl-Radikale, die ein sehr starkes Oxidationsmittel darstellen.

Daneben werden natürlich ständig weitere Bindungen des Schadstoffmoleküls, bzw. was davon übrig ist, durch Photolyse gespalten. Dieser Prozeß kommt erst zum Erliegen, wenn die ganzen Schadstoffe in stabile und ungefährliche Endprodukte umgewandelt sind. Diese Endprodukte sind $CO_2$ und Wasser bei reinen Kohlenwasserstoffen, bei Chlorkohlenwasserstoffen entsteht zusätzlich HCl.

Das erfindungegemäße Verfahren beruht auf den gleichen Prinzipien, die auch in der Natur für den Abbau von Schadstoffen verantwortlich sind. Was in der Natur jedoch z. T. Jahre dauern kann, wird hier in konzentrierter und beschleunigter Form durchgeführt.

Beim erfindungsgemäßen Verfahren werden als "Chemikalien" lediglich Licht, Wasser und Sauerstoff benötigt, zusätzliche Oxidationsmittel wie Ozon oder Wasserstoffperoxid werden nicht benötigt. Die Möglichkeit, den Abbauprozeß durch Zusatz von Oxidantien zu beschleunigen, ist natürlich immer noch gegeben. Dies kann bei speziellen Problemen, z. B. sehr große Abwassermengen, hohe Schadstoffkonzentrationen eventuell von Bedeutung sein.

Bedingt durch die hundertfach größere Energiedichte der Hg-Hochdruckstrahler sind die Abmessungen der Lampe und damit auch des Photoreaktors wesentlich geringer. Beim erfindungsgemäßen Verfahren genügt ein einziger Hochdruckstrahler und man hat trotzdem in der Regel eine um den Faktor 10 höhere Lichtmenge zur Verfügung, als bei konventionellen Photooxidations-Anlagen, bei wesentlich kompakterer Bauweise.

Dies ergibt natürlich finanzielle Vorteile, sowohl durch Einsparung an Materialien, als auch durch den Verzicht an zusätzlichen Oxidantien.

Zusammenfassend kann man sagen, daß das erfindungsgemäße Verfahren durch konsequente Ausnutzung neuer Entwicklungen besser und wirtschaftlicher arbeitet als bisherige UV-Oxidationstechniken. Das erfindungsgemäße Verfahren ist ein zukunftsweisendes Verfahren zur Beseitigung von Umweltschäden und zur Abwasserbehandlung.

Nach dem Anspruch 2 besteht der Vorteil, daß der apparative Aufwand aufgrund des breitbandigen Hochdruckstrahlers und aufgrund seiner hohen Energiedichte klein bleibt. Dies schlägt sich in erster Linie kostenmäßig zugrunde und bietet außerdem noch den großen Vorteil der geringen Wartung und der hohen Standzeit.

Aufgrund der Abschottung des Hochdruckstrahlers durch ein Quarzrohr gegenüber dem zu reinigenden Medium gemäß dem Anspruch 3 ist ein Auswechseln der Hochdrucklampe ohne Beeinträchtigung des mediumhaltigen Teiles des erfindungsgemäßen Behälters in einfacher Weise möglich. Auch ist der Wirkungsgrad des Hochdruckstrahlers verbessert, indem die größere Oberfläche des Quarzrohres einen höheren Durchsatz des Mediums ermöglicht.

Nach dem Anspruch 4 liegt eine einfache Lagerung des Quarzrohres vor.

Ein Kostenvorteil ergibt sich gemäß dem Anspruch 5 durch das bodenseitig geschlossene Quarzrohr. Es sind daher bodenseitige Dichtungsmaßnahmen nicht notwendig. Es genügt eine einfache Lagerung des Quarzrohres in dem bodenseitigen Verschluß des Behälters.

Ein weiterer Kostenvorteil ist durch das kostengünstige, beidseitig offene Quarzrohr nach dem Anspruch 6 gegeben.

Eine optimale Betriebstemperatur des Hochdruckstrahlers ergibt sich gemäß dem Merkmal des Anspruches 7 durch die gezielte Zuführung von Kühlluft zunächst in den Bereich des Fußes des Hochdruckstrahlers mit anschließender Umlenkung der Luft in den Strahlungsbereich des Hochdruckstrahlers. Dadurch ist eine hohe Lebensdauer des Hochdruckstrahlers bei geringem appartiven Aufwand gewährleistet. Die Luft wird am Fuße des Hochdruckstrahlers mit einfachen Mitteln verwirbelt, so daß eine gute Wärmeabführung gewährleistet ist.

Ein hoher Verwirbelungsgrad des Mediums liegt durch den Anspruch 8 vor.

Eine einfache und wirkungsvolle Bauart des Leitkörpers ergibt sich aus dem Anspruch 9.

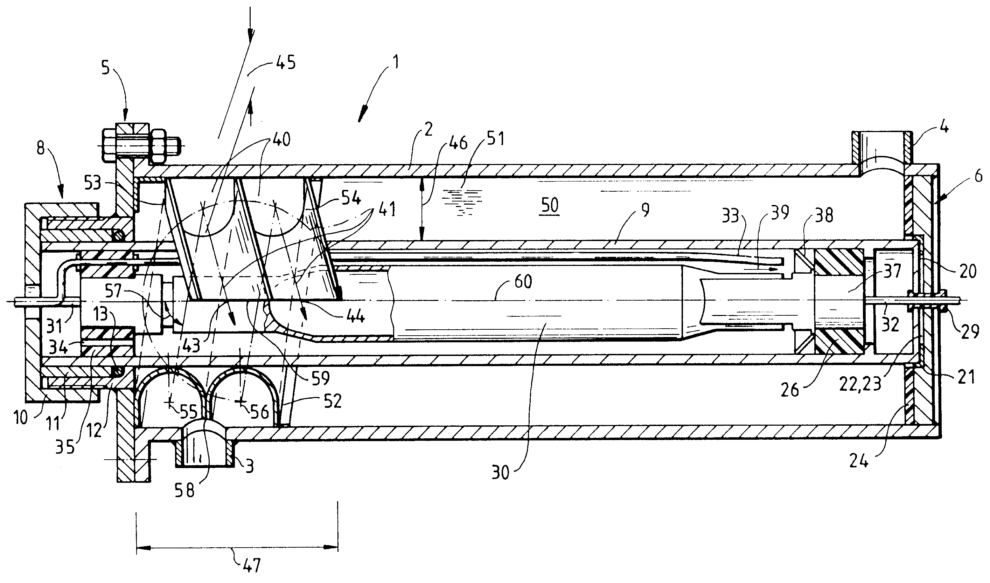

Ein Ausführungsbeispiel der Erfindung ist in der einzigen Figur dargestellt.

Ein Photoreaktor 1 besteht aus einem kreiszylindrischen Behälter 2 mit Zulauf 3 und Ablauf 4 sowie aus endseitigen flüssigkeitsdichten Verschlüssen 5, 6.

In dem Verschluß 5 ist ein Schraubverschluß 8 integriert. Ein Quarzrohr 9 ist über eine Schraubkappe 10, einen Spannring 11, einen Gewindestutzen 12 und über einen Dichtungsring 13 flüssigkeitsdicht und lagefixiert gehalten. Der Dichtungsring 13 steht unter dem Druck des Spannringes 11 und lagert daher das Quarzrohr 9 im Bereich des Verschlusses 5 schwimmend.

Das andere, geschlossene Ende 20 des Quarzrohres 9 ist in einem Kunststoffring 21 umfangseitig in dem Verschluß 6 gelagert. Hierzu ist in dem Verschluß 6 eine Ausnehmung 22 vorgesehen, wobei zwischen dem Verschluß 6 und dem Ende 20 ein Luftspalt 23 besteht. Damit ist das Quarzrohr 9 auch an seinem geschlossenen Ende schwimmend gelagert.

Ein Hochdruckstrahler 30 ist neben den elektrischen Versorgungsleitungen 31, 32 und einer Kühlmittelzuführung 33 und einer Kühlmittelabführung 34 in dem Quarzrohr 9 über Isolationsringe 35, 36 gelagert. Eine Kabeldurchführung ist mit 29 bezeichnet.

Die als Rohr ausgebildete Kühlmittelzuführung 33 reicht bis nahe an den Fuß 37 des Hochdruckstrahlers, wobei ein Leitblech 38 das Kühlmittel Luft entgegen der Zuführrichtung gemäß dem Pfeil 39 umlenkt und auch verwirbelt.

Ein weiterer Haltering für das Quarzrohr 9 ist mit 24 bezeichnet.

In einem ringförmigen Zwischenraum 50 zwischen dem Behälter 2 und dem Quarzrohr 9 strömt ein zu reinigendes Medium, wie Industrieabwasser 51. Zur Vermeidung einer laminaren Strömung des Industrieabwassers 51 in dem Zwischenraum 50 ist im Bereich des Zulaufes 3 ein Leitkörper 52 zur Verwirbelung des Industrieabwassers 51 vorgesehen.

Dieser Leitkörper 52 weist zwei wendelförmige Ringe 53, 54 auf, wobei die Ringebenen 55, 56 zwar parallel zueinander liegen, aber in einem spitzen Winkel 57 zu einer Hauptachse 60 des Photoreaktors 1 stehen.

Der Zulauf 3 ist in bezug auf die Ringe 53, 54 mittig angeordnet, so daß das zugeführte Industrieabwasser 51 jeweils zur Hälfte in die Ringe 53, 54 fließt.

Verunreinigtes Industrieabwasser, das über den Zulauf 3 zugeführt wird, erfährt durch die Ringe 53, 54 als erstes eine Ablenkung der Strömungsrichtung aufgrund einer von den Ringen 53, 54 gebildeten Trennkante 58. Anschließend werden die Flüssigkeitsteilchen aufgrund der schräg bzw. in einem Winkel 57 zur Hauptachse stehenden Ringe 53, 54 geführt und treten durch Öffnungen 59 etwa nach einem Umlauf von 270° gemäß den strichpunktiert, in zwei Ebenen gezeichneten Pfeilen 41 aus den Ringen 53, 54 in den Zwischenraum 50 ein. Die Öffnungen 59 entsprechen den schalenförmigen Querschnitten 40 und liegen bei 43 und 44. Der Leitkörper 52 füllt gemäß einem Abschnitt 47 den Zwischenraum 50 vollständig aus. Die schalenförmigen Querschnitte 40 entsprechen mit ihrer lichten Weite 45 nahezu der Weite 46 des Zwischenraumes 50.

Aufgrund der vorbeschriebenen Verwirbelung der Flüssigkeitsteilchen stellt sich in dem Zwischenraum 50 eine laminare Strömung nicht ein. Die als difus zu bezeichnende Strömung im Zwischenraum 50 bewirkt eine relativ lange Verweildauer der Flüssigkeitsteilchen bzw. der mit Schadstoffen angereicherten Flüssigkeitsteilchen. Damit ist ein hoher Wirkungsgrad erzielbar.

Das gereinigte Industrieabwasser fließt dann durch den Ablauf 4 ab.

Bei größeren Durchsatzmengen von Industrieabwasser 51 oder anderen Medien liegt es im Bereich der Erfindung zur weiteren Verwirbelung des Mediums in dem Zwischenraum 50 zusätzliche Leitkörper 52 vorzusehen.

Die Reinigungsleistung des erfindungsgemäßen Verfahrens ist aus folgendem Beispiel ersichtlich. Es wurde ein Wasser mit einer Schadstoffkontaminierung von ca. 1 mg/l Trichlorethen behandelt. Diese Konzentration stellt einen typischen Wert für eine Grundwasserverunreinigung dar. Die Reinigung wurde einmal mit Zugabe von Wasserstoffperoxid und einmal nur mittels UV-Bestrahlung durchgeführt. Es wurden folgende Versuchsparameter gewählt:
- Reaktor mit einer Strahlereinheit
- Durchfluß: 400 l/h
- Startkonzentration: 910 $\mu$g Trichlorethen/l

| Kontaktzeit | Konzentration | |
|---|---|---|
| | nur UV-Behandlung | 1 g $H_2O_2$/l |
| 0,5 s | 130 $\mu$g | 3,0 $\mu$g |
| 1,0 s | 64 $\mu$g | 0,6 $\mu$g |
| 1,5 s | 36 $\mu$g | 0,5 $\mu$g |
| 2,0 s | 6,7 $\mu$g | 0,5 $\mu$g |
| 3,3 s | 0,7 $\mu$g | 0,5 $\mu$g |

Wie man leicht sieht, ist mittels des erfindungsgemäßen Verfahrens eine vollständige Zerstörung der Schadstoffe schon bei einer Kontaktzeit von ca. 3 s möglich. Bei Zugabe von wenig Oxidationsmittel kann die Zeit sogar noch verkürzt werden.

Der Hochdruckstrahler (30) weist ein breitbandiges Emissionsspektrum mit einem Hauptmaximum bei 254 nm sowie zusätzlich eine breite Emissionsbande zwischen 200 nm und 240 nm auf, deren Maximum bei ca. 221 nm liegt und deren Intensität mindestens 40 % des Hauptmaximums beträgt. Desweiteren liegt eine Emission zwischen 260 nm und 340 nm vor, deren Intensität bei mindestens 70 % des Hauptmaximums liegt.

**Patentansprüche**

1. Verfahren zur Photolyse von organischen Schadstoffen in Wasser mittels UV-Licht in einem Strömungsbehälter,
dadurch gekennzeichnet,
daß das Wasser (51) in einem Behälter (2) zunächst verwirbelt wird und dann erst in den Bereich des UV-Lichtes eines Hochdruckstrahlers (30) gelangt, wobei das Wasser etwa wendelförmig um den Hochdruckstrahler (30) umläuft.

**2.** Vorrichtung zur Durchführung des Verfahrens nach Anspruch 1,
dadurch gekennzeichnet,
daß der Hochdruckstrahler (30) ein breitbandiges Emissionsspektrum mit einem Hauptmaximum bei 254 nm besitzt, zusätzlich eine breite Emissionsbande zwischen 200 nm und 240 nm besitzt, deren Maximum bei ca. 221 nm liegt und deren Intensität mindestens 40 % des Hauptmaximums beträgt, desweiteren eine Emission zwischen 260 nm und 340 nm besitzt, deren Intensität bei mindestens 70 % des Hauptmaximums liegt.

**3.** Vorrichtung zur Durchführung des Verfahrens nach Anspruch 1,
dadurch gekennzeichnet,
daß der Hochdruckstrahler (30) von dem Wasser (51) durch ein Quarzrohr (9) abgeschottet ist, wobei das Quarzrohr (9) nahezu den gesamten Behälter (2) durchsetzt.

**4.** Vorrichtung nach Anspruch 3,
dadurch gekennzeichnet,
daß das Quarzrohr (9) in dem Behälter (2) in radialer Richtung durch Ringe (13, 21, 24) schwimmend gelagert ist.

**5.** Vorrichtung nach Anspruch 3,
dadurch gekennzeichnet,
daß das Quarzrohr (9) bodenseitig (Ende 20) geschlossen ist.

**6.** Vorrichtung nach Anspruch 3,
dadurch gekennzeichnet,
daß das Quarzrohr (9) beidseitig offen ist.

**7.** Vorrichtung nach Anspruch 3,
dadurch gekennzeichnet,
daß der Hochdruckstrahler (30) durch Luft gekühlt ist, in dem ein dünnes Rohr (33) im Bereich des Fußes (37) endet, wobei das Rohr (33) auf ein Leitblech (38) zur Umlenkung der Luft gerichtet ist.

**8.** Vorrichtung zur Durchführung des Verfahrens nach Anspruch 1,
dadurch gekennzeichnet,
daß an einem Ende des Behälters (2) ein Zulauf (3) für das Wasser (51) vorgesehen ist, und ein Leitkörper (52) zur Verwirbelung des Wassers (51) wendelförmig verlaufende Ringe (53, 54) mit schalenförmigen Querschnitten (40) besitzt, wobei der Zulauf (3) mittig über einer Trennkante (58) zwischen den Ringen (53, 54) steht und jeder Ring (53, 54) sich etwa über mindestens 180° erstreckt.

**9.** Vorrichtung nach Anspruch 8,
dadurch gekennzeichnet,
daß der Leitkörper (52) den Zwischenraum (50) gemäß einem Abschnitt (47) vollständig ausfüllt und die schalenförmigen Querschnitte (40) bezüglich ihrer radialen lichten Weite (45) nahezu der Weite (46) des Zwischenraums (50) entsprechen.

| | Europäisches Patentamt | EUROPÄISCHER RECHERCHENBERICHT | Nummer der Anmeldung |
|---|---|---|---|

EP    92 10 5864

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-605 420 (BBC BROWN,BOVERI)<br>* Spalte 4, Zeile 58 - Zeile 60; Abbildung 13 *<br>--- | 1 | C02F1/32 |
| A | FR-A-1 278 161 (KONNE-BORDENAVE)<br>* Seite 2, linke Spalte, letzter Absatz *<br>--- | 1 | |
| A | EP-A-0 005 235 (IHLE INGENIEURGESELLSCHAFT)<br>* Seite 5, Zeile 13 - Seite 6, Zeile 5;<br>Abbildung 1 *<br>--- | 1 | |
| A | US-A-4 798 702 (TUCKER)<br>----- | 1,6 | |

RECHERCHIERTE SACHGEBIETE (Int. Cl.5)

C02F

Der vorliegende Recherchenbericht wurde für alle Patentansprüche erstellt

| Recherchenort | Abschlußdatum der Recherche | Prüfer |
|---|---|---|
| DEN HAAG | 07 JULI 1992 | KASPERS H.M.C. |